Europäisches Patentamt

European Patent Office

Office européen des brevets

(11) Publication number: **0 059 933**
**B1**

# EUROPEAN PATENT SPECIFICATION

(45) Date of publication of patent specification: **14.08.85**

(51) Int. Cl.⁴: **G 01 N 27/56**

(21) Application number: **82101645.8**

(22) Date of filing: **03.03.82**

(54) Solid electrolyte oxygen sensing element of laminated structure with gas diffusion layer on outer electrode.

(30) Priority: **06.03.81 JP 31212/81**

(43) Date of publication of application:
**15.09.82 Bulletin 82/37**

(45) Publication of the grant of the patent:
**14.08.85 Bulletin 85/33**

(84) Designated Contracting States:
**DE FR GB**

(56) References cited:
**DE-A-2 909 201**
**GB-A-2 066 478**
**US-A-4 040 929**
**US-A-4 207 159**
**US-A-4 224 113**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Touda, Masayuki**
**Oppama Plant of Nissan Motor Co,. Ltd. No.1**
**Natsushima-cho Yokosuka City (JP)**
Inventor: **Uchida, Masaaki**
**Oppama Plant of Nissan Motor Co,. Ltd. No. 1**
**Natsushima-cho Yokosuka City (JP)**
Inventor: **Matoba, Kazuo**
**Oppama Plant of Nissan Motor Co,. Ltd. No. 1**
**Natsushima-cho Yokosuka City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

### Background of the invention

This invention relates to an oxygen sensing element of the concentration cell type, which is in the form of a laminate of thin layers, including an oxygen ion conductive solid electrolyte and inner and outer electrode layers supported on a ceramic substrate and is suitable for use in combustion gases.

It is well known to use an oxygen sensor for the purpose of detecting actual air/fuel ratio of an air-fuel mixture supplied to a combustor by examining the concentration of oxygen in the combustion gas discharged from the combustor. This technique has become particularly popular in the field of automotive engines as the basis of feedback control of the air/fuel ratio. In most cases oxygen sensors for this purpose are of the oxygen concentration cell type utilizing an oxygen ion conductive solid electrolyte such as zirconia stabilized with calcia or yttria. In this field, a recent trend is to miniaturize the oxygen-sensitive element of the oxygen sensor by constructing it as a laminate of thin, film-like layers on a ceramic substrate of very small size. In this laminate, a concentration cell is constituted of a solid electrolyte layer and two electrode layers one of which is formed on the outer side of the solid electrolyte layer so as to be exposed to a gas subject to measurement and the other on the inner side.

U.S. Patent No. 4,207,159 discloses an oxygen sensing element of this type, which is characterized in that the solid electrolyte layer and the two electrode layers are all porous and that, in operation, a reference oxygen partial pressure needful for the oxygen concentration cell is established at the inner electrode layer by supplying a DC current to the concentration cell so as to flow through the solid electrolyte layer between the two electrode layers. When used in a combustion gas discharged from a combustor such as an internal combustion engine, an electromotive force generated by this oxygen sensing element exhibits a great and sharp change only if the air/fuel ratio of an air-fuel mixture burned in the combustor varies from one side of a stoichiometric air/fuel ratio to the other side. Such an output characteristic is common to most of known oxygen sensors of the concentration cell type, and is favorable for feedback control of a combustor to be operated with a stoichiometric air-fuel mixture.

However, oxygen sensors of the above described output characteristic are useless for diesel engines and so-called lean-burn gasoline engines which employ a very high air/fuel ratio with a view to greatly improving the fuel economy. According to U.S. Patent No. 4,224,113, the output characteristic of the oxygen sensing element of U.S. Patent No. 4,207,159 can be modified such that the electromotive force varies nearly proportionally to the air/fuel ratio in the combustor over a range from a stoichiometric air/fuel ratio to a fairly higher air/fuel ratio by selecting the direction of flow of the aforementioned DC current and adequately controlling the intensity of the current. However, in automotive engines that are operated with a lean air-fuel mixture of a predetermined air/fuel ratio it is far more convenient to use an oxygen sensor which exhibits a great and sharp change in the magnitude of the electromotive force or output voltage at the predetermined air/fuel ratio.

### Summary of the invention

It is an object of the present invention to provide an improved oxygen sensing element of the concentration cell type in the form of a laminate of thin layers supported on a substrate, which element exhibits, when used in a combustion gas discharged from a combustor, a great change in the magnitude of its output voltage in response to a change in the air/fuel ratio of an air-fuel mixture burned in the combustor across a definite air/fuel ratio value which may be considerably higher than a stoichiometric value and, therefore, is useful in air/fuel ratio control systems for various engines including diesel engines and lean-burn gasoline engines.

It is another object of the invention to utilize an oxygen sensing element according to the invention in an air/fuel ratio detection apparatus which can surely detect a deviation of air/fuel ratio of an air-fuel mixture supplied to a combustor from a predetermined value, which may be considerably higher than a stoichiometric value, by operating the oxygen sensing element in the combustion gas discharged from the combustor.

The present invention provides an oxygen sensing element having a substrate made of a ceramic material and a laminate of thin layers supported on the substrate, the laminate comprises a reference electrode layer which is formed on the substrate and has a microscopically porous and gas-permeable structure, a microscopically porous and gas-permeable layer of an oxygen ion conductive solid electrolyte formed on the outer surface of the reference electrode layer, a measurement electrode layer which is formed on the outer surface of the solid electrolyte layer and has a microscopically porous and gas-permeable structure, and a gas diffusion layer which is formed of a ceramic material and formed on the outer surface of the measurement electrode layer and has a microscopically porous and gas-permeable structure, characterized in that the porosity of this gas diffusion layer in terms of a total volume of a micropores per unit mass is not greater than 0.2 $cm^3/g$.

Further, the present invention provides the use of the oxygen sensing element according to the invention in an apparatus for detecting a deviation of the air/fuel ratio of an air-fuel mixture burned in a combustor from a predetermined value by disposing it in a combustion gas discharged from the combustor and examining the concentration of oxygen therein.

In operation of this oxygen sensing element in a gas atmosphere, a nearly constant reference oxygen partial pressure can be maintained at a reference electrode layer by supplying a DC current usually of the order of $10^{-3}$ A to the element so as to flow through the solid electrolyte layer from the reference electrode layer toward the measurement electrode layer thereby forcing oxygen ions to migrate through the solid electrolyte layer from the measurement electrode layer to the reference electrode layer. The gas diffusion layer which is relatively low in its porosity offers a resistance to the access of oxygen molecules contained in the gas atmosphere to the measurement electrode layer, and as a joint effect of such a resistance and the migration of oxygen ions in the aforementioned direction a partial pressure of oxygen at the measurement electrode layer remains below the oxygen partial pressure in the gas atmosphere. Because of such a difference in oxygen partial pressure across the gas diffusion layer, the output characteristic of this oxygen sensing element becomes such that the magnitude of the electromotive force generated by this element greatly varies in response to a change in the oxygen partial pressure in the gas atmosphere across a definite and relatively high value.

In the case of using this oxygen sensing element in a combustion gas discharged from a combustor, it is possible to afford the element with such an output characteristic that the electromotive force exhibits a great and sharp change in its magnitude only when the air/fuel ratio of an air-fuel mixture burned in the combustor changes across a predetermined value, which is considerably higher than a stoichiometric value, by appropriately determining the thickness and porosity of the gas diffusion layer and the intensity of the aforementioned DC current. Accordingly this oxygen sensing element is quite suited to diesel engines and lean-burn gasoline engines.

As an additional effect of the presence of the gas diffusion layer, it becomes sufficient to maintain an oxygen partial pressure of a relatively small magnitude at the reference electrode layer. Accordingly this oxygen sensing element can be operated by supplying a relatively small DC current to the solid electrolyte layer, and, furthermore, it becomes improbable that the thin reference electrode layer might be damaged by the action of the reference oxygen partial pressure.

Preferably, the gas diffusion layer is so formed as to have a thickness in the range from 10 to 300 μm.

In some conventional oxygen sensors of the concentration cell type, the outer or measurement electrode layer is covered with a porous protecting layer formed of a ceramic material. The gas diffusion layer according to the invention seems to resemble such a protecting coating layer.

However, it should be noted that the gas diffusion layer according to the invention is required to be very low in porosity as is apparent from the above specified maximum value of the total volume of micropores, whereas the porous protecting layers in known oxygen sensors are far higher in porosity in order to allow gases to almost freely pass therethrough.

It is preferred that an oxygen sensing element according to the invention further comprises an auxiliary diffusion layer of a ceramic material, which is formed on the outer surface of the above described gas diffusion layer and is higher in porosity than the gas diffusion layer. Preferably, the auxiliary diffusion layer is made to be not greater than 200 μm in thickness and from 0.1 to 0.5 cm³/g in porosity in terms of a total volume of micropores per unit mass The auxiliary diffusion layer has the effect of favorably modifying the output characteristic of the oxygen sensing element and, besides, serves as a filter layer to prevent the underlying gas diffusion layer and the measurement electrode layer from being damaged or contaminated by solid particles contained in the combustion gas in which the element is disposed.

Essentially, an air/fuel ratio detection apparatus utilizing an oxygen sensing element according to the invention comprises a power supply means for supplying a DC current of a controlled intensity to the element such that the current flows through the solid electrolyte layer from the reference electrode layer to the measurement electrode layer, and a voltage measurement means for measuring an electromotive force generated between the reference and measurement electrode layers of the oxygen sensing element.

Brief description of the drawings

Fig. 1 is a sectional an explanatory view of an oxygen sensing element as an embodiment of the present invention;

Fig. 2 is a block diagram of an oxygen sensing apparatus including the element of Fig. 1;

Fig. 3 is a diagram for the explanation of the principle of function of the oxygen sensing element of Fig. 1;

Figs. 4(A) to 4(H) illustrate an exemplary process of producing the oxygen sensing element of Fig. 1;

Fig. 5 is a graph showing a variation in the output characteristic of the oxygen sensing element of Fig. 1 depending on the intensity of a control current supplied to the element;

Fig. 6 is a chart showing an example of the porosity of a gas diffusion layer in the oxygen sensing element of Fig. 1;

Fig. 7 is a graph showing a variation in the output characteristic of the oxygen sensing element of Fig. 1 depending on the porosity of the diffusion layer;

Fig. 8 is a graph showing a variation in the output characteristic of the element of Fig. 1 depending on the thickness of the diffusion layer;

Fig. 9 is a sectional and explanatory view of an oxygen sensing element which is a preferred modification of the element of Fig. 1;

Fig. 10 is a diagram for the explanation of the principle of function of the oxygen sensing element of Fig. 9; and

Figs. 11, 12 and 13 are graphs which show variations in the output characteristic of the oxygen sensing element of Fig. 9 and correspond to Figs. 5, 7 and 8, respectively.

Description of the preferred embodiments

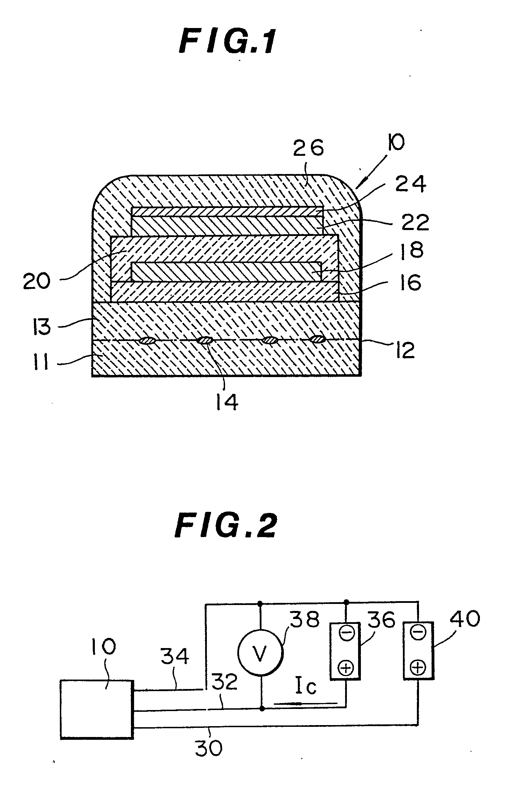

Fig. 1 shows an oxygen sensing element 10 embodying the present invention. A substrate 12 as a structurally basic member of this element 10 is made of a heat-resistant and electrically insulating ceramic material such as alumina, forsterite, mullite, steatite or spinel. A heater element 14 in the form of either a thin film-like layer or a thin wire of an electrically resistive metal is embedded in the substrate 12. In practice, the substrate 12 is prepared by face-to-face bonding of two ceramic sheets 11 and 13 one of which is precedingly provided with the heater element 14.

The sensitive part of this oxygen sensing element 10 takes the form of a laminate of thin layers supported on the ceramic substrate 12. The laminate includes an intermediate layer 16 formed on a major surface of the substrate 12 so as to cover a sufficiently large area of the substrate surface. This layer 16 is formed of a ceramic material such as alumina, spinel, zirconia or calcium zirconate. An inner electrode layer 18, which is commonly called reference electrode layer, lies on the upper surface of the intermediate layer 16 so as leave a marginal region of the surface of the intermediate layer 16 uncovered. A layer 20 of an oxygen ion conductive solid electrolyte typified by $ZrO_2$ containing a small amount of stabilizing oxide such as $Y_2O_3$, CaO or MgO closely covers the upper surface of the reference electrode layer 18 and comes into direct contact with the marginal region of the intermediate layer 16, so that the reference electrode layer 18 is substantially entirely enclosed by the intermediate layer 16 and the solid electrolyte layer 20. An outer electrode layer 22, which is commonly called measurement electrode layer, lies on the upper surface of the solid electrolyte layer 20. Each of these three layers 18, 20 and 22 has a microscopically porous and gas-permeable structure. The material of the two electrode layers 18 and 22 is either a metal which is high in electronic conductivity or a conductive cermet containing such a metal. It is preferred to use a metal that is resistant to corrosion and exhibits a catalytic activity on oxidation reactions of carbon monoxide and hydrocarbons, and therefore it is particularly preferred to use platinum or a platinum alloy. In the case of using a conductive cermet, preferably the ceramic component of the cermet is alumina, mullite, spinel or a solid electrolyte employed as the material of the adjacent layer 20, such as zirconia containing yttria or calcia.

As is known, the reference electrode layer 18, the oxygen ion conductive solid electrolyte layer 20 and the measurement electrode layer 22 constitute an oxygen concentration cell that generates an electromotive force when there is a different between an oxygen partial pressure at the reference electrode layer side of the solid electrolyte layer 20 and an oxygen partial pressure at the measurement electrode side of the same layer 20. The intermediate layer 16 is not essential to the oxygen concentration cell, but this layer 16 is added firstly for the purpose of enhancing the strength of adhesion of the laminated oxygen concentration cell to the ceramic substrate 12. Preferably, the intermediate layer 16 is so formed as to have a microscopically porous and gas-permeable structure, because then this layer 16 serves an additional function of preventing accumulation of an unwantedly large amount of oxygen molecules at the reference electrode layer 18 during operation of the oxygen sensing element 10 and thereby preventing the reference electrode layer 18 from being damaged by an exccessively high partial pressure of oxygen. The oxygen sensing element 10 includes the heater 14 since the aforementioned concentration cell cannot properly function at temperatures below a certain level such as about 400°C.

There is a supplementary measurement electrode layer 24 on the outer surface of the above described measurement electrode layer 22. The material of the supplementary electrode layer 24 is similar to that of the underlying measurement electrode layer 22, but the supplementary electrode layer 24 must be formed by a physical vapor deposition method such as sputtering, vacuum evaporation or ion plating, whereas the measurement electrode layer 22 is formed by a sintering method. The supplementary electrode layer 24 has a microscopically porous and gas-permeable structure, and the thickness of this layer 24 does not exceed 1 μm. The supplementary measurement electrode layer 24 is not essential to the oxygen concentration cell formed in this element 10, but the addition of this electrode layer 24 is highly effective for improving the quickness of response of the oxygen sensing element 10 because of a great increase in an effective surface area where the measurement electrode (22+24) comes into contact with a gas subject to measurement and also a great increase in the so-called triple-phase points where the gas, electrode and the solid electrolyte comes into contact with one another.

The combination of the measurement electrode layer 22 and the supplementary measurement electrode layer 24 is closely and substantially entirely covered with a gas diffusion layer 26. To enhance mechanical strength, this diffusion layer 26 is formed so as to cover the marginal region of the solid electrolyte layer 20 too and to come into direct contact with the upper surface of the substrate 12 in its marginal region. The gas diffusion layer 26 is formed of a heat-resistant and electrically insulating ceramic material, and spinel ($MgO$—$Al_2O_3$) is a particularly preferred ceramic material for this layer 26. As will hereinafter be described in detail, the gas diffusion layer 26 is so formed as to have a controlled thickness, which is preferably within the range from 10 to 300 µm, and a microscopically porous and gas-permeable structure of a controlled and relatively low porosity which is not greater than 0.2 cm³/g in terms of the total volume of the micropores per unit mass measured at the atmospheric pressure. It is suitable to form this diffusion layer 26 by a plasma-spraying method, though it is also possible to employ a different method such as a wet sintering method having the steps of applying a wet composition containing a powder of the ceramic material to the incomplete oxygen sensing element either by dipping or by printing, drying the applied composition and then firing the element to sinter the ceramic powder contained in the applied composition.

As can be seen in Fig. 2, the oxygen sensing element 10 has three lead wires 30, 32, 34 which are inserted into the substrate 12 in their tip portions. The first lead wire 30 is connected to one terminal of the heater 14 within the substrate 12. The second lead wire 32 is connected to the reference electrode layer 18 by using a hole formed in the upper half of the substrate 12 and a conductor filled in the hole. In a similar manner, the third lead wire 34 is connected to the measurement electrode layer 22, and this lead wire 34 is connected also to the other terminal of the heater 14.

Fig. 2 shows a fundamental construction of an oxygen sensing apparatus which utilizes the above described oxygen sensing element 10 as a probe. In this apparatus, the reference electrode layer 18 of the oxygen sensing element 10 is connected to the positive terminal of a DC power supply 36 via the second lead wire 32 and the measurement electrode layer 22 to the negative terminal of this power supply 36 via the third lead wire 34. A potentiometer or an equivalent voltage measuring device 38 is connected between the second and third lead wires 32 and 34, i.e. between the reference and measurement electrode layers 18 and 22. There is another DC power supply 40, and the positive terminal of this power supply 40 is connected to one terminal of the heater 14 in the element 10 via the first lead wire 30 and the negative terminal to the other terminal of the heater 14 via the third lead wire 34. Thus, the third wire 34 is used as a grounding lead common to the heater 14 and oxygen concentration cell in the oxygen sensing element 10.

To detect the concentration of oxygen in a gas atmosphere such a combustion gas, the oxygen sensing element 10 in the apparatus of Fig. 2 is entirely disposed in the gas atmosphere, and the power supply 40 is used to keep the heater 14 in the element 10 energized (except when the gas temperature is very high) so as to maintain the element 10 usually at about 600°C. The power supply 36 is used to continuously supply a DC current $I_C$ of a controlled intensity of the order of $10^{-4}$ to $10^{-2}$ A to the concentration cell in the oxygen sensing element 10. As will be understood from the above described manner of electrical connections, the control current $I_C$ flows through the solid electrolyte layer 20 from the reference electrode layer 18 toward the measurement electrode layer 22. As a result, oxygen ions formed by electrode reactions at the measurement electrode layer 22 are forced to migrate through the solid electrolyte layer 20 from the measurement electrode 22 toward the reference electrode layer 18. In addition to this phenomenon, the gas diffusion layer 26 offers some resistance to the diffusion of oxygen molecules contained in the gas subject to measurement therethrough. Therefore, a partial pressure oxygen at the measurement electrode layer 22 becomes lower than the partial pressure of oxygen in the gas atmosphere. On the other hand, a partial pressure of oxygen at the reference electrode layer becomes higher by reason of conversion of oxygen ions migrated through the solid electrolyte layer 20 to oxygen molecules upon arrival at this electrode layer 18. However, oxygen molecules formed at the reference electrode layer 18 gradually diffuse outwardly through the micropores in the solid electrolyte layer 20, and also through the micropores in the intermediate layer 16 when this layer 16 is formed porously. Consequentially, a nearly constant partial pressure of oxygen is established at the reference electrode layer 18 as a balance between the inflow of oxygen ions and outflow of oxygen molecules. The partial pressure of oxygen at the measurement electrode layer 22 is lower than the nearly constant oxygen partial pressure at the reference electrode layer 18, and therefore the oxygen sensing element 10 generates an electromotive force between its reference and measurement electrode layers 18 and 22. The magnitude of the electromotive force depends on the magnitude of the difference in oxygen partial pressure between the reference electrode layer 18 and the measurement electrode layer 22, and the oxygen partial pressure at the measurement electrode layer 22 becomes lower than the oxygen partial pressure in the ambient gas atmosphere in a determined proportion.

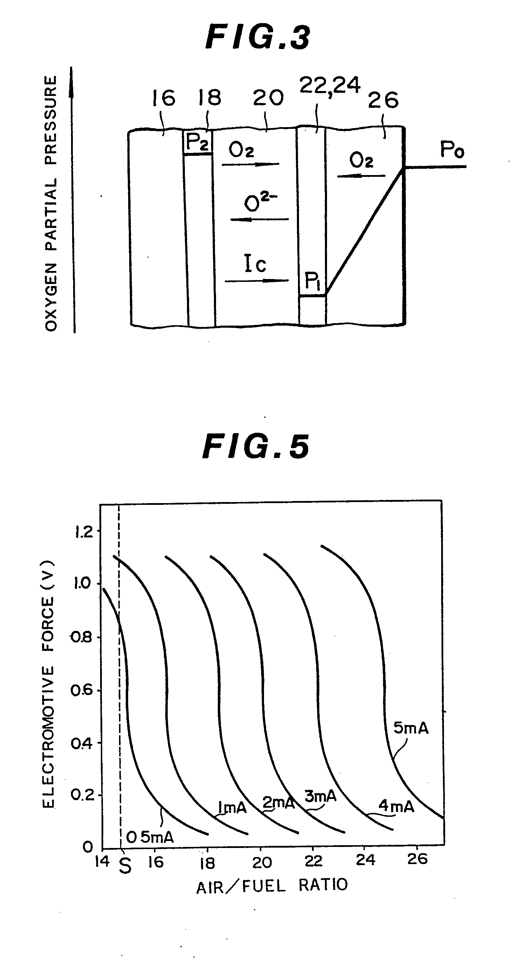

Fig. 3 illustrates the above described phenomena in the oxygen sensing element 10. The partial pressure of oxygen in the gas atmosphere subject to measurement is assumed to be at the level of $P_0$. Due to the smallness of the total volume of the micropores per unit mass of the gas diffusion layer 26 and the migration of oxygen ions from the measurement electrode layer 22 toward the reference electrode layer 18 through the solid electrolyte layer 20, a balanced oxygen partial pressure $P_1$ at the measurement electrode layer 22 becomes lower than the oxygen partial pressure $P_0$ in the gas atmosphere, so that a considerable gradient of oxygen partial pressure is produced across the gas diffusion layer 26. At the reference electrode layer 18 an

oxygen partial pressure $P_2$, which is higher than the partial pressure $P_1$ and might be even higher than the partial pressure $P_0$ in the gas atmosphere, is maintained as the result of a balance between the supply of oxygen ions to this electrode 18 through the solid electrolyte layer 20 and the diffusion of oxygen molecules from this electrode 18 into the gas atmosphere through the micropores in the solid electrolyte layer 20 (and the intermediate layer 16). Then the magnitude of an electromotive force E generated by the oxygen concentration cell in this oxygen sensing element 10 is given by the Nernst's equation:

$$E = 0.0496T\log\frac{P_2}{P_1}\ (mV)$$

where T represent the absolute temperature.

In the apparatus of Fig. 2, the voltage measuring device 38 measures the electromotive force generated by the oxygen sensing element 10 to use it as a signal indicative of the partial pressure or concentration of oxygen in the gas atmosphere subject to measurement. When the gas atmosphere is a combustion gas such as the exhaust gas of an internal combustion engine, the measured electromotive force is indicative of the air/fuel ratio of a gas mixture actually supplied to the engine.

In general the electromotive force E becomes lower as the air/fuel ratio becomes higher, but the relationship between the air/fuel ratio and the electromotive force is not linear. When the air/fuel ratio lowers beyond a certain definite value, the electromotive force E exhibits a sharp change in its magnitude at that air/fuel ratio to shift to a very low level from a considerably high level at lower air/fuel ratio values, and *vice versa*. If the gas diffusion layer 26 is omitted from the oxygen sensing element 10 of Fig. 1, such a sharp change in the magnitude of the electromotive force occurs approximately at a stoichiometric air/fuel ratio almost irrespective of the intensity of the control current $I_C$. In the element 10 according to the invention however, such a critical air/fuel ratio can be shifted to a higher value by increasing the intensity of the control current $I_C$. Furthermore, the output characteristic of this oxygen sensing element 10 can similarly be modified also by controlling the porosity and/or thickness of the gas diffusion layer 26 without greatly increasing the intensity of the control current $I_C$. This is an important advantage of the present invention.

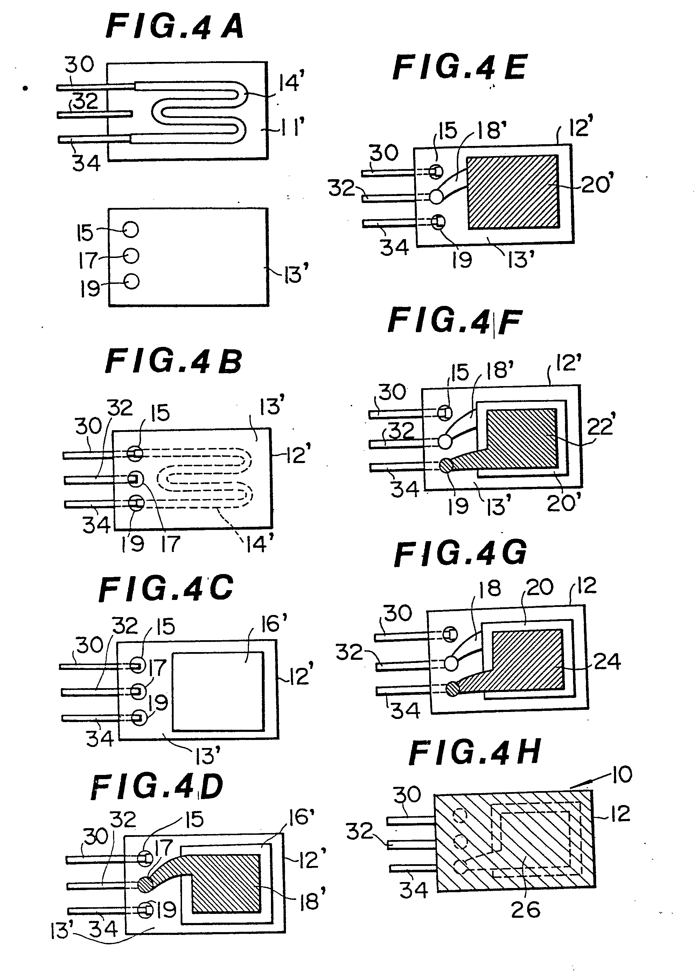

Prior to more detailed description about the dependence of the output characteristic of the oxygen sensing element 10 in Fig. 2 on the intensity of the control current $I_C$ and the structure of the diffusion layer 26, an exemplary process of producing this element 10 will be described with reference to Figs. 4(A) to 4(H).

Referring to Fig. 4(A), two rectangular sheets 11' and 13' of green or unfired alumina are used to prepare the ceramic substrate 12. The two sheets 11' and 13' are identical in dimensions (10

mm×5 mm wide and 0.7 mm thick for example), but the second sheet 13' is formed with three through-holes 15, 17, 19 (0.6 mm in diameter) in an end region. As the initial step of providing the heater 14 to the substrate 12, a conductive paste containing a plantinum powder dispersed in an organic liquid vehicle is applied onto a major surface of the first green alumina sheet 11' by screen-printing so as to form a paste layer 14' in the pattern of a meandering or zigzag path. Indicated at 30, 32 and 34 are three platinum wires (each 0.2 mm in diameter and about 7 mm in length for instance) employed as lead wires of the oxygen sensing element. In a parallel and spaced arrangement, tip portions of these lead wires 30, 32, 34 are placed on the surface of the green alumina sheet 11' such that the tip portions of the first and third lead wires 30 and 34 come into contact with the two terminal regions of the conductive paste layer 14', respectively, while the tip portion of the second lead wire 32 lies in the middle between the other lead wires 30 and 34 without making contact with any region of the paste layer 14'.

As shown in Fig. 4(B), the second green alumina sheet 13' is placed on the first sheet 11'. Since the three through-holes 15, 17, 19 in the second sheet 13' are arranged correspondingly to the three lead wires 30, 32, 34 disposed in the aforementioned manner, the tip portions of the three lead wires 30, 32, 34 are partly exposed to the atmosphere through the three holes 15, 17, 19, respectively. The upper green alumina sheet 13' is bonded to the lower sheet 11' by heating the piled two sheets to about 100°C and applying a pressure of about 4,9 bar for instance. This procedure gives an unfired intermediate 12' of the ceramic substrate 12.

Referring to Fig. 4(C), a paste prepared by dispersing 70 parts by weight of a powdered solid electrolyte material consisting of 95 mole% of $ZrO_2$ and 5 mole% of $Y_2O_3$ in 30 parts by weight of an organic liquid vehicle is applied onto the upper surface of the unfired substrate 12' by screen-printing so as to form a paste layer 16' having a surface area of about 9 mm². This paste layer 16' is dried at about 100°C for about 1 h. The thickness of the paste layer 16' is controlled such that the intermediate layer 16 in Fig. 1 obtained through subsequent sintering of this paste layer 16' has a thickness of 10 μm by way of example.

Next, a conductive cermet paste is applied onto the outer surface of the dried solid electrolyte layer 16' by screen-printing so as to form a cermet paste layer 18' in a pattern as shown in Fig. 4(D). An elongate arm portion of this paste layer 18' extends to the hole 17 located above the second lead wire 32, and this hole 17 is filled with the conductive cermet paste. For example, the conductive cermet paste is prepared by dispersing a mixture of 63 parts by weight of a platinum powder and 7 parts by weight of the aforementioned solid electrolyte ($ZrO_2$—$Y_2O_3$) powder in 30 parts by weight of an organic liquid vehicle. The cermet paste layer 18' is dried at about 100°C for about 1 h. The thickness of the cermet paste layer 18' is controlled such that the reference electrode layer 18 in Fig. 1 obtained through subsequent sintering of the paste layer 18' has a thickness of 10 μm for instance.

Referring to Fig. 4(E), the solid electrolyte paste mentioned with reference to Fig. 4(C) is applied onto the outer surface of the dried conductive cermet layer 18' by screen-printing so as to form an oxygen ion conductive solid electrolyte paste layer 20', which covers the entire surface area of the cermet layer 18' except the elongate arm portion and comes into close contact with the upper surface of the previously formed solid electrolyte layer 16' in a region surrounding the major periphery of the cermet layer 18'. This solid electrolyte paste layer 20' is dried at about 100°C for about 1 h. The thickness of this paste layer 20' is controlled such that the solid electrolyte layer 20 in Fig. 1 obtained through subsequent sintering of the paste layer 20' has a thickness of 40 μm by way of example.

Referring to Fig. 4(F), the conductive cermet paste mentioned with reference to Fig. 4(D) is applied onto the upper surface of the dried solid electrolyte layer 20' by screen-printing so as to form a conductive cermet paste layer 22' in the pattern as shown in Fig. 4(F). An elongate arm portion of this paste layer 22' extends to the hole 19 located above the third lead wire 34, and this hole 19 is filled with the conductive cermet paste. Also the hole 15 located above the first lead wire 30 is filled with the same cermet paste. The thickness of the cermet paste layer 22 is controlled such that the measurement electrode layer 22 in Fig. 1 obtained through subsequent sintering of the paste layer 22' has a thickness of 10 μm for instance. The cermet paste layer 22' is dried at about 100°C for about 1 h.

The unfired intermediate in the state of Fig. 4(F) is fired in air at 1500°C for 2 h to simultaneously sinter the assembly 12' of the green alumina sheets and the plantinum layer 14', the laminate of the dried paste layers 16', 18', 20', 22' and the cermet paste filled into the holes 15, 17, 19. The sintered intermediate is subjected to ultrasonic cleansing in an organic solvent and thereafter dried.

Referring to Fig. 4(G), the supplementary measurement electrode layer 24 is formed on the outer surface of the sintered measurement electrode layer 22 by depositing platinum or its alloy, or a conductive cermet containing platinum or its alloy, by a physical vapor deposition method. For example, this electrode layer 24 is formed by a vacuum evaporation of platinum to a thickness of 0.5 μm at a deposition rate of 3 Å/s in a vacuum of 0,0066 Pa ($5\times10^{-5}$ Torr).

Finally, as shown in Fig. 4(H), the gas diffusion layer 26 is formed by depositing spinel on the outer surfaces of the laminate in the state of Fig. 4(G) by plasma-spraying using a spinel powder having a mean particle size of 10 μm for instance. A mixed gas of Ar and He is suitable as the plasma-producing gas. The thickness and the porosity of the diffusion layer 26 can be controlled by varying the conditions of plasma spraying. For example, the diffusion layer 26 can be formed to a thickness of 140 μm with a total volume of micropores per unit mass of 0.04 cm³/g by performing plasma-spraying of the spinel powder at a spraying power of about 35 kW for a period of 30 s, while the intermediate of the oxygen sensing element is held on a holder rotating at a rate of 50—100 rpm at a spraying distance of 10—15 cm.

It is preferred that the gas diffusion layer 26 has a thickness in the range from 10 to 300 μm with a total volume of micropores per unit mass in the range from 0.001 to 0.2 cm³/g. To meet such a desire, it is suitable to use a spinel powder, or an alternative ceramic material powder, having a mean particle size in the range from about 10 to 40 μm.

Experiment 1

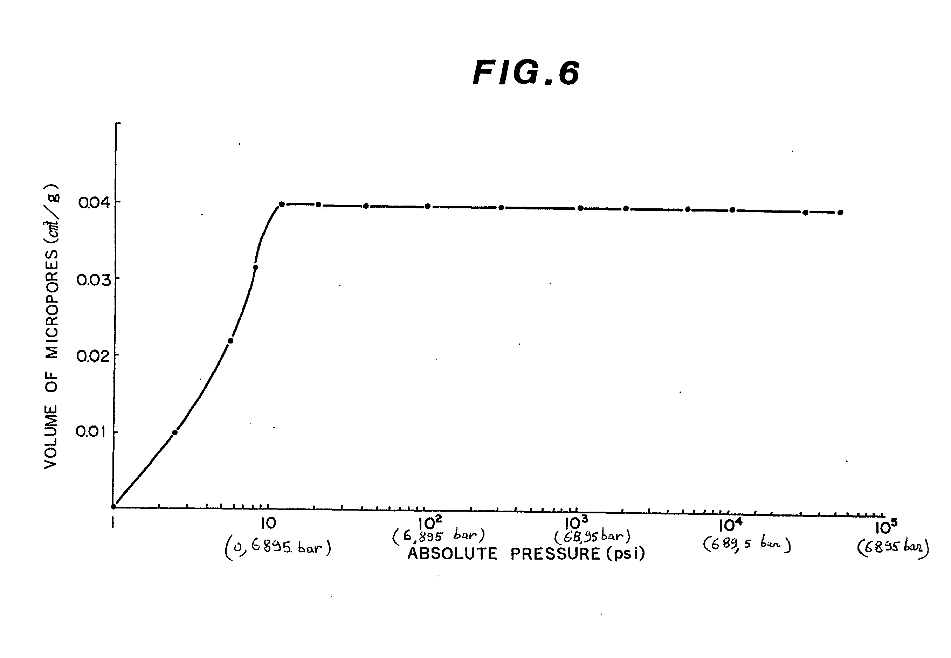

The oxygen sensing element 10 of Fig. 1 was produced by using the method and materials described with reference to Figs. 4(A) to 4(H). The thickness of the gas diffusion layer 26 formed by plasma-spraying of the aforementioned spinel powder was 140 μm, and the total volume of micropores per unit mass of this layer 26 was 0.04 cm³/g when measured by a porosimeter in which mercury was pressurized up to 4137 bar (60000 psi). The graph of Fig. 6 shows the result of the measurement.

The oxygen sensing element 10 was incorporated into an air/fuel ratio detecting apparatus constructed as shown in Fig. 2 and disposed in exhaust gases of a gasoline engine which was operated at various air/fuel ratio values. The temperature of the exhaust gases at the location of the oxygen sensing element 10 was maintained constantly at 600°C, and the heater 14 in the element 10 was kept energized so as to remain at a constant temperature of 800°C. The intensity of the control current $I_c$ forced to flow through the solid electrolyte layer 20 from the reference electrode layer 18 toward the measurement electrode layer 22 was varied over the range from 0.5 to 5.0 mA. Fig. 5 shows the result of this experiment.

As can be seen in Fig. 5, when the intensity of the control current $I_c$ was as low as 0.5 mA, a small change in the air/fuel ratio value across the stoichiometric air/fuel ratio (represented by S on the abscissa) caused a great and sharp change in the magnitude of the electromotive force E the element 10 generated. Therefore, this oxygen sensing element 10 is applicable to an internal combustion engine which is operated with a stoichiometric air-fuel mixture by fixing the intensity of the control current $I_c$ at 0.5 mA.

When the intensity of the control current $I_c$ was raised to 1 mA or a still higher value, a small change in the air/fuel ratio value across the stoichiometric ratio caused little change in the magnitude of the electromotive force E, but a great and sharp change in the magnitude of the electromotive force E occurred when the air/fuel ratio underwent a small change across a certain definite value. For example, when the control current $I_c$ was 3 mA such a change in the magnitude of the electromotive force E occurred at an air/fuel ratio of appropriately 20. This means that the oxygen sensing element 10 is applicable to a lean-burn engine in which the air/fuel ratio is controlled to 20 by fixing the intensity of the control current $I_c$ at 3 mA. As can be seen, the critical value of the air/fuel ratio gradually shifted to higher values as the control current $I_c$ was augmented.

Experiment 2

Some samples of the oxygen sensing element 10 of Fig. 1 were produced by using the method and materials described with reference to Figs. 4(A) to 4(H) except that the porosity of the gas diffusion layer 26 was varied by varying the spraying power in the plasma-spraying operation. The spinel powder used in the plasma-spraying operation had a mean particle size of 10 μm, and the holder for supporting the intermediate of the oxygen sensing element was positioned so as to provide a spraying distance of 15 cm and rotated at a rate of 70 rpm. In every sample, the thickness of the diffusion layer 26 was 140 μm. The relationship between the spraying power and the total volume of micropores per unit mass of the diffusion layer 26 was as follows.

| Spraying power (KW) | Volume of micropores (cm³/g) |
|---|---|
| 12 | 0.2 |
| 18 | 0.1 |
| 25 | 0.05 |
| 34 | 0.04 |
| 40 | 0.03 |
| 50 | 0.01 |
| 80 | 0.001 |

These samples of oxygen sensing element were subjected to the test described in Experiment 1 except that the intensity of the control current $I_c$ was constantly 3 mA for every sample.

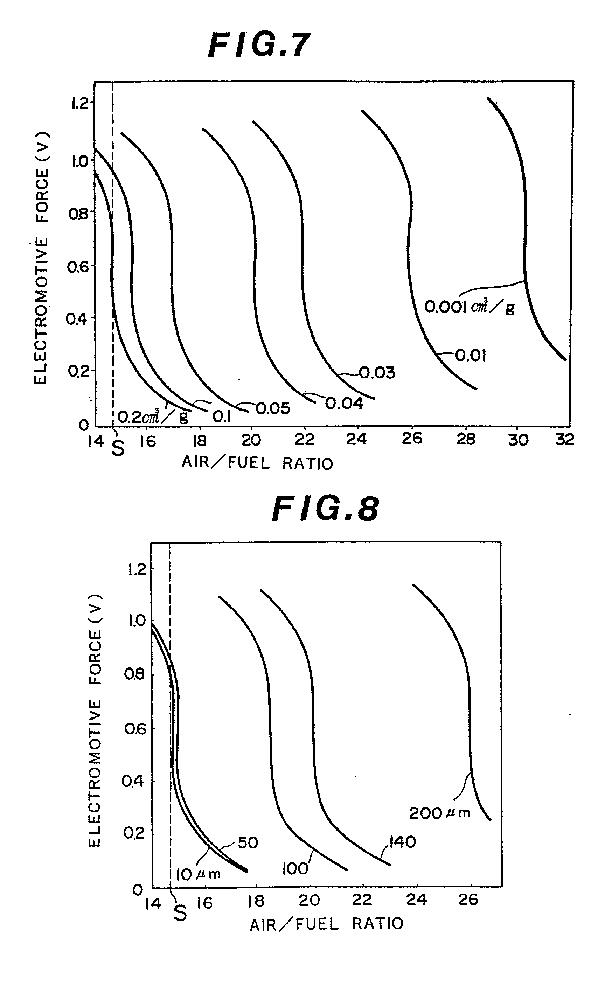

Fig. 7 shows the result of this experiment. When the total volume of micropores in the diffusion layer 26 was 0.2 cm³/g, a small change in the air/fuel ratio across the stoichiometric ratio caused a great and sharp change in the magnitude of the electromotive force E. When the total volume of the micropores was smaller, such a great and sharp change in the magnitude of the electromotive force E did not occur at the stoichiometric ratio but did occur at a higher air/fuel ratio value, and such a critical air/fuel ratio value became higher as the total volume of the micropores was decreased. For example, when the total volume of the micropores was 0.04 cm³ g, it was possible to surely detect a small change in the air/fuel ratio across a value of 20 which is representative of a considerably lean air-fuel mixture. As represented by the rightmost curve, when the total volume of the micropores was as small as 0.001 cm³/g the sensing element exhibited a high sensitivity to a small change in the composition of an extremely lean mixture having a nominal air/fuel ratio value of about 30.

A supplementary test was made on the sample in which the porosity of the gas diffusion layer 26 was 0.2 cm³/g by increasing the control current $I_c$ to 5 mA, but the relationship between the air/fuel ratio and the electromotive force E was still as represented by the leftmost curve in Fig. 7. Another sample was produced by increasing the thickness of the diffusion layer 26 to 200 μm without varying the porosity from 0.2 cm³/g and tested in the same way, but the relationship between the air/fuel ratio and the electromotive force E remained practically unchanged. Therefore, the total volume of micropores in the gas diffusion layer 26 needs to be less than 0.2 cm³/g if it is intended to detect changes in the air/fuel ratio of a lean air-fuel mixture.

Experiment 3

Still different samples of the oxygen sensing element were produced by using the above described method and materials except that the thickness of the gas diffusion layer 26 was varied by varying the spraying time. In this case the spraying power was constantly 34 KW, and in other respects the spraying conditions were the same as in Experiment 2. In every sample the total volume of micropores in the diffusion layer 26 was 0.04 cm³/g. The relationship between the spraying time and the thickness of the diffusion layer 26 was as follows.

| Spraying time(s) | Thickness (μm) |
|---|---|
| 8 | 10 |
| 12 | 50 |
| 22 | 100 |
| 30 | 140 |
| 45 | 200 |
| 70 | 250 |

These samples were subjected to the test described in Experiment 1, but the intensity of the control current $I_c$ was constantly 3 mA for every sample.

Fig. 8 shows the result of this experiment. When the thickness of the diffusion layer 26 was as small as 10 μm, a small change in the air/fuel ratio across the stoichiometric ratio caused a great and sharp change in the magnitude of the electromotive force E. An increase in the thickness of the diffusion layer 26 to 50 μm produced only a very small difference in the relationship between the air/fuel ratio and the electromotive force E. However, when the thickness of the diffusion layer 26 was 100 μm or greater, such a great and sharp change in the magnitude of the electromotive force E did not occur at or around the stoichiometric ratio but did occur at considerably higher air/fuel ratio value. The critical value of the air/fuel ratio became higher as the thickness of the diffusion layer 26 was increased.

The experimental data in Fig. 8 indicate that the thickness of the gas diffusion layer 26 needs to be at least 10 μm if it is intended to use this oxygen sensing element 10 in a combustor designed to burn either a stoichiometric air-fuel mixture of a lean air-fuel mixture. Besides the principal purpose of controlling the output characteristic of the oxygen sensing element, the diffusion layer 26 serves the purpose of protecting the concentration cell part of the element 10 against direct exposure to high-temperature and high velocity combustion gases. Also from this viewpoint, it is desirable that the thickness of the diffusion layer 26 is at least 10 μm. However, it is undesirable to unlimitedly increase the thickness of the diffusion layer 26 because the quickness of response of the oxygen sensor to a change in the oxygen concentration in the gas atmosphere in which the element 10 is disposed becomes inferior as the thickness of the diffusion layer 26 increases. When the oxygen sensing element 10 is used as an air/fuel ratio detecting means in an automotive internal combustion engine operated with a lean air-fuel mixture, the response time to the oxygen sensing element (the amount of time elapsed from the moment of an abrupt change in the oxygen concentration in the exhaust gas to the arrival of the output voltage of the oxygen sensing element to 60% of a value expected from the change in the oxygen concentration) is desired to be shorter than about 500 ms to avoid the driver or passengers feeling an unpleasant shock accompanying an abrupt and great modulation of the rate of fuel supply to the engine. To ensure that the response time of the oxygen sensing element is shorter than 500 ms, it is desirable that the thickness of the diffusion layer 26 does not exceed 300 μm. Besides, the diffusion layer 26 formed by plasma-spraying so as to be smaller in the total volume of micropores than 0.2 cm³/g tends to become weak in the strength of adhesion of the sprayed particles to one another so that there arises a possibility of peeling of the diffusion layer when the thickness of the diffusion layer 26 is increased beyond 300 μm.

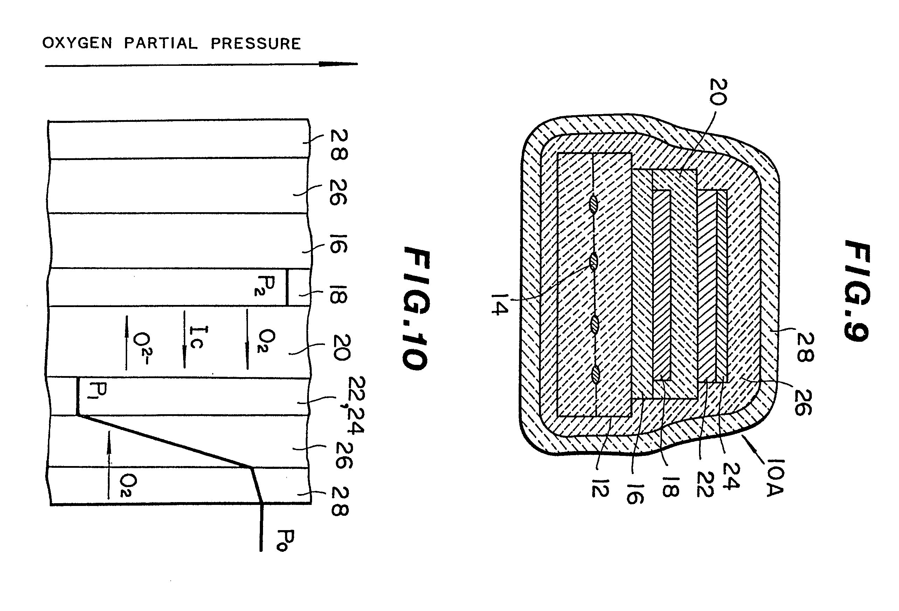

Fig. 9 shows another oxygen sensing element 10A which is a preferred modification of the element 10 of Fig. 1. As a sole substantial difference from the element 10 of Fig. 1, this oxygen sensing element 10A has an auxiliary gas diffusion layer 28 formed on the entire outer surface of the already described gas diffusion layer 26. As an additional difference, the gas diffusion layer 26 (and the auxiliary gas diffusion layer 28) covers not only the oxygen concentration cell part of the element 10A but also the substrate 12, but this is merely a matter of design option and is not essential.

The auxiliary gas diffusion layer 28 is formed of a heat-resistant and electrically insulating ceramic material, and preferably the gas diffusion layer 26 and the auxiliary gas diffusion layer 28 are formed of the same material. The auxiliary gas diffusion layer 28 must be higher in porosity than the underlying gas diffusion layer 26, and preferably the porosity of the auxiliary diffusion layer 28 in terms of the total volume of micropores per unit mass is in the range from 0.1 to 0.5 cm³/g. It is preferable that the thickness of the auxiliary diffusion layer 28 is not greater than 200 μm. Also it is preferable that the thickness of the primary gas diffusion layer 26 does not exceed 250 μm when the auxiliary diffusion layer 28 is provided and that the total thickness of the two diffusion layer 26 and 28 does not exceed 300 μm. It is suitable to form the auxiliary diffusion layer 28 by plasma-spraying using a ceramic material powder having a mean particle size of 10 to 50 μm, though it is also possible to employ a different method such as a wet sintering method mentioned in regard of the primary gas diffusion layer 26.

A primary purpose of the auxiliary gas diffusion layer 28 is to restrict the quantity of the gas subject to measurement supplied to the oxygen concentration cell in the element 10A through the primary gas diffusion layer 26. Besides, this layer 28 serves as a sort of filter layer which traps contaminous solid particles contained in the gas subject to measurement and, hence, contributes to the enhancement of the durability and stability of the oxygen sensing element.

Fig. 10 illustrates the principle of the function of the oxygen sensing element 10A of Fig. 9. Also in this element 10A, the control current $I_c$ flows through the solid electrolyte layer 20 from the reference electrode layer 18 toward the measurement electrode layer 22 during operation of the element 10A. The partial pressure of oxygen in the gas subject to measurement is assumed to be at the level of $P_0$. The gas diffuses into the element 10A first through the auxiliary gas diffusion layer 28. Since this diffusion layer 28 is relatively high in porosity, only a gentle gradient of oxygen partial pressure is produced across this layer 28. The primary gas diffusion layer 26 is low in porosity also in this oxygen sensing element 10A. Therefore, an oxygen partial pressure $P_1$ established at the measurement electrode layer 22 as a balance between the diffusion of oxygen molecules through the gas diffusion layer 26 and the migration of oxygen ions from this electrode layer 22 toward the reference electrode layer 13 through the solid electrolyte layer 20 becomes considerably lower than the oxygen partial pressure $P_0$ in the gas atmosphere, so that a steep gradient of oxygen partial pressure is produced across the gas diffusion layer 26. At the reference electrode layer 18, an oxygen partial pressure $P_2$ higher than the partial pressure $P_1$ is established

as a balance between the inflow of oxygen in the form of ions and diffusion of oxygen molecules from this electrode layer 18 into the exterior gas atmosphere through the porous solid electrolyte layer 20 (and the intermediate layer 16) and gas diffusion layers 26 and 28. Thus, the oxygen sensing element 10A of Fig. 9 operates on the same principle as the element 10 of Fig. 1 and exhibits a resembling output characteristic. However, when this oxygen sensing element 10A and the element 10 of Fig. 1 are operated with application of the same control current $I_c$, this element 10A is responsive to higher oxygen concentrations owing to the restricting effect of the auxiliary gas diffusion layer 28 on the admission of the gas subject to measurement.

Experiment 4

The oxygen sensing element 10A of Fig. 9 was produced by using the method and materials described with reference to Figs. 4(A) to 4(H) until the formation of the primary gas diffusion layer 26. In this case the gas diffusion layer 26 was so formed as to become 130 μm in thickness and 0.04 cm³/g in porosity. After that, the nearly completed element was subjected to ultrasonic cleansing in an organic solvent and thereafter dried.

The auxiliary diffusion layer 28 was formed by plasma-spraying of a spinel powder having a mean particle size of 20 μm. By regulating the spraying power to 7 KW, the auxiliary diffusion layer 28 was so formed as to become 100 μm in thickness and 0.3 cm³/g in porosity. This oxygen sensing element 10A was tested in the same way as in Experiment 1 by varying the intensity of the control current $I_c$ over the range from 0.5 to 5.0 mA. Fig. 11 shows the result of this experiment.

From a comparison between Fig. 5 and Fig. 11 it is understood that, at a given intensity of the control current $I_c$, the addition of the auxiliary diffusion layer 28 to the element 10 of Fig. 1 caused a shift of the curve representing the relationship between the air/fuel ratio and the electromotive force E toward the higher air/fuel ratio side. For example, when the control current $I_c$ was 3 mA the oxygen sensing element 10 of Fig. 1 was responsive to a change in the air/fuel ratio across a value of about 20, but the element 10A of Fig. 9 was responsive to a change in the air/fuel ratio across a higher value of about 21.

Experiment 5

Some samples of the oxygen sensing element 10A of Fig. 9 were produced by the method and materials mentioned in Experiment 4 except that the porosity of the primary gas diffusion layer 26 was varied over the range from 0.1 cm³/g to 0.001 cm³/g by varying the spraying power in the plasma-spraying operation.

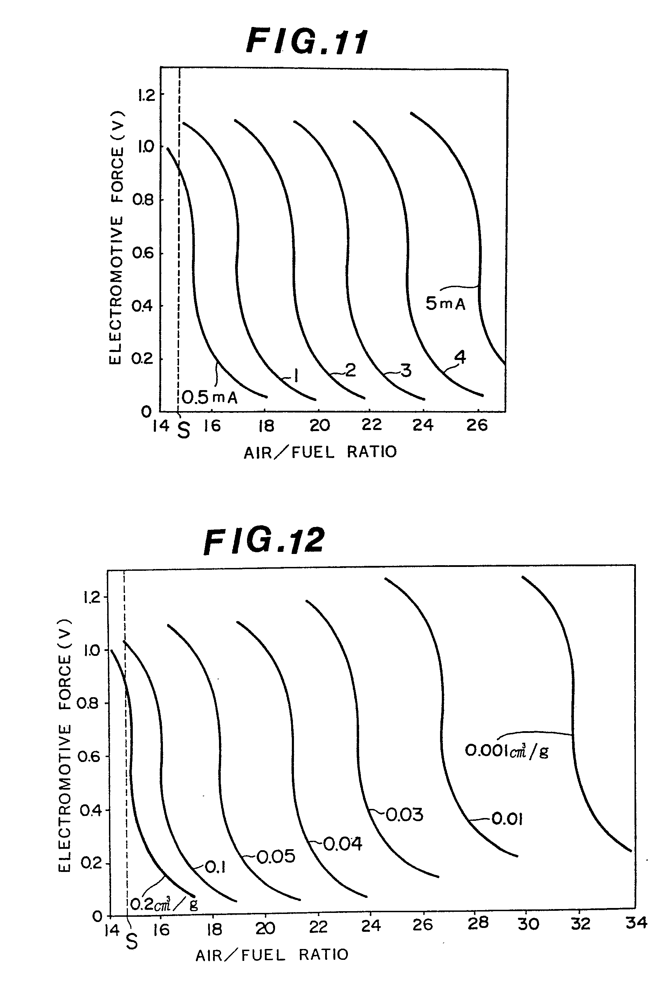

These samples were tested in the same way as in Experiment 2 by fixing the intensity of the control current $I_c$ at 3 mA. The result of this experiment is shown in Fig. 12. As will be understood from a comparison between Fig. 7 and Fig. 12, the addition of the auxiliary diffusion layer 28 to the element 10 caused only a slight change in the relationship between air/fuel ratio and the electromotive force E when the porosity of the primary gas diffusion layer 26 was 0.2 cm³/g. By supplementary tests, it was confirmed that this tendency remained practically unchanged even though the control current $I_c$ was intensified or the thickness of the gas diffusion layer 26 was increased and/or the thickness and porosity of the auxiliary diffusion layer 28 were varied. However, when the gas diffusion layer 26 was lower in porosity, the addition of the auxiliary diffusion layer 28 caused each of the output characteristic curves to shift toward the higher air/fuel ratio side.

Experiment 6

Different samples of the oxygen sensing element 10A of Fig. 9 were produced by using the method and materials mentioned in Experiment 4 except that the thickness of the primary gas diffusion layer 26 was varied over the range from 10 to 200 μm by varying the spraying time.

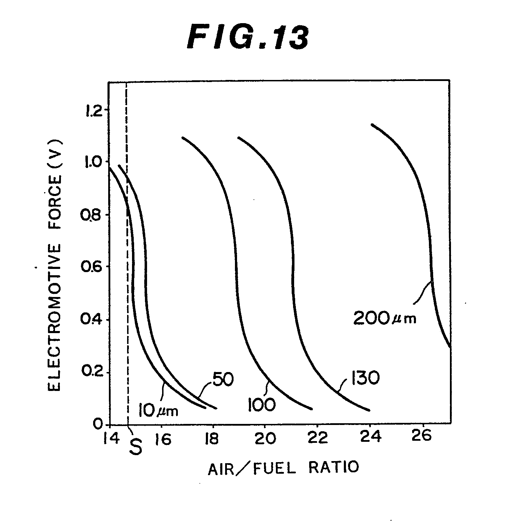

These samples were tested in the same way as in Experiment 3 by fixing the intensity of the control current $I_c$ at 3 mA. Fig. 13 shows the result of this experiment. From a comparison between Fig. 8 and Fig. 13, it is understood that the addition of the auxiliary diffusion layer 28 to the element 10 of Fig. 1 produced only a very small change in the dependence of the output characteristic of the oxygen sensing element on the thickness of the gas diffusion layer 26.

The above described preferable range of the porosity of the auxiliary diffusion layer 28 is determined for the following reasons. If the total volume of micropores per unit mass of the auxiliary diffusion layer 28 is less than 0.1 cm³/g, the addition of the auxiliary diffusion layer 28 becomes almost meaningless because the addition of such a low porosity layer scarcely differs from a mere increase in the thickness of the gas diffusion layer 26. However, when the porosity of the auxiliary diffusion layer 28 is above 0.5 cm³/g this layer 28 tends to become insufficient in its physical strength. It is desirable to limit the maximum thickness of the auxiliary diffusion layer 28 to 200 μm in order to ensure strong adhesion of the sprayed particles to one another and also to avoid an unnecessary increase in the production cost.

**Claims**

1. An oxygen sensing element having a substrate (12) made of a ceramic material and a laminate of thin layers supported on the substrate, the laminate comprises a reference electrode layer (18) which is formed on the substrate and has a microscopically porous and gas-permeable structure, a microscopically porous and gas-permeable layer (20) of an oxygen ion conductive solid electrolyte formed on the outer surface of the reference electrode layer, a measurement electrode layer (22, 24) which is formed on the outer surface of the solid electrolyte layer and has a microscopically porous and gas-permeable structure, and a gas diffusion layer (26) which is formed of a ceramic material and formed on the outer surface of the measurement electrode layer and has a microscopically porous and gas-permeable structure, characterised in that the porosity of the gas diffusion layer (26) in terms of a total volume of micropores per unit mass is not greater than 0.2 cm³/g.

2. An oxygen sensing element according to Claim 1, wherein the thickness of said gas diffusion layer (26) is in the range from 10 to 300 μm.

3. An oxygen sensing element according to Claim 1, wherein said ceramic material of said gas diffusion layer is spinel.

4. An oxygen sensing element according to Claim 1, wherein said gas diffusion layer is formed by plasma-spraying.

5. An oxygen sensing element according to Claim 1, further comprising an auxiliary diffusion layer (28) which is formed of a ceramic material and formed on the outer surface of said gas diffusion layer (26), the auxiliary diffusion layer being porous and gas-permeable but is higher in porosity than said gas diffusion layer.

6. An oxygen sensing element according to Claim 5, wherein said auxiliary diffusion layer (28) is not greater in thickness than 200 μm and is in the range from 0.1 to 0.5 cm³/g in porosity in terms of a total volume of micropores per unit mass.

7. An oxygen sensing element according to Claim 6, wherein the thickness of said gas diffusion layer (26) is not greater than 250 μm.

8. An oxygen sensing element according to Claim 7, wherein the total thickness of said gas diffusion layer and said auxiliary diffusion layer is not greater than 300 μm.

9. An oxygen sensing element according to Claim 7, wherein said gas diffusion layer and said auxiliary diffusion layer are formed of the same ceramic material.

10. An oxygen sensing element according to Claim 1 or 5, wherein both said reference electrode layer (18) and said measurement electrode layer (22) comprise a metal which exhibits a catalytic activity on oxidation reactions of carbon monoxide and hydrocarbons.

11. An oxygen sensing element according to Claim 10, wherein said reference and measurement electrode layers comprise platinum.

12. An oxygen sensing element according to Claim 1 or 5, wherein said measurement electrode layer has a double-layer structure consisting of an inner layer (22) which lies directly on the outer surface of said solid electrolyte layer (20) and is formed by sintering of a powdered electrode material and an outer layer (24) which covers the outer surface of said inner layer and is formed by deposition of an electrode material by a physical vapor deposition method, the thickness of said outer layer being not greater than 1 μm.

13. An oxygen sensing element according to Claim 1 or 5, further comprising an intermediate layer (16) which is formed of a ceramic material and intervenes between a major surface of said substrate (12) and the inner surface of said reference electrode layer (18).

14. An oxygen sensing element according to Claim 13, wherein said intermediate layer is microscopically porous and gas-permeable.

15. An oxygen sensing element according to Claim 1 or 5, wherein the porosity of said gas diffusion layer is in the range from 0.001 to 0.2 cm³/g.

16. Use of the oxygen sensing element (10) according to Claims 1, 5 or 6 in an apparatus for detecting a deviation of the air/fuel ratio of an air-fuel mixture burned in a combustor from a predetermined value by disposing it in a combustion gas discharged from the combustor and examining the concentration of oxygen therein.

**Patentansprüche**

1. Sauerstoffsensorelement mit einem aus einem keramischen Material hergestellten Substrat (12) une einem auf dem Substrat aufgetragenen Laminat aus dünnen Schichten, wobei das Laminat eine Bezugselektrodenschicht (18), die auf dem Substrat gebildet ist und eine mikroskopisch poröse und gasdurchlässige Struktur besitzt, eine auf der Oberfläche der Bezugselektrodenschicht ausgebildete, mikroskopisch poröse und gasdurchlässige Schicht (20) aus einem Sauerstoffionen leitenden Festelektrolyt, eine auf der Oberfläche der Festelektrolytschicht gebildete Meßelektrodenschicht (22, 24) mit einer mikroskopisch porösen und gasdurchlässigen Struktur und eine auf der Oberfläche der Meßelektrodenschicht und aus einem keramischen Material gebildete Gasdiffusionsschicht (26) mit mikroskopisch poröser und gasdurchlässiger Struktur, umfaßt, dadurch gekennzeichnet, daß die Porosität der Gasdiffusionsschicht (26), ausgedrückt als Gesamtvolumen an Mikroporen pro Einheitsmasse, nicht größer als 0,2 cm³/g ist.

2. Sauerstoffsensorelement nach Anspruch 1, dadurch gekennzeichnet, daß die Dicke der Gasdiffusionsschicht (26) im Bereich von 10 bis 300 μm liegt.

3. Sauerstoffsensorelement nach Anspruch 1, dadurch gekennzeichnet, daß das keramische Material der Gasdiffusionsschicht Spinell ist.

4. Sauerstoffsensorelement nach Anspruch 1, dadurch gekennzeichnet, daß die Gasdiffusionsschicht durch Plasmaspritzen gebildet wird.

5. Sauerstoffsensorelement nach Anspruch 1, umfassende weiterhin eine Hilfsdiffusionsschicht (28), die aus einem keramischen Material und auf der Oberfläche der Gasdiffusionsschicht (26) gebilder ist, wobei die Hilfsdiffusionsschicht porös und gasdurchlässig ist, jedoch eine höhere Porosität als die Gasdiffusionsschicht aufweist.

6. Sauerstoffsensorelement nach Anspruch 5, dadurch gekennzeichnet, daß die Hilfsdiffusionsschicht (28) eine Dicke von nicht mehr als 200 μm und eine Porosität im Bereich von 0,1 bis 0,5 cm³/g, ausgedrückt als Gesamtvolumen an mikroporen pro Einheitsmasse, aufweist.

7. Sauerstoffsensorelement nach Anspruch 6, dadurch gekennzeichnet, daß die Dicke der Gasdiffusionsschicht (26) nicht mehr als 250 μm beträgt.

8. Sauerstoffsensorelement nach Anspruch 7, dadurch gekennzeichnet, daß die Gesamtdicke aus der Gasdiffusionsschicht und der Hilfsdiffusionsschicht nicht mehr als 300 μm beträgt.

9. Sauerstoffsensorelement nach Anspruch 7, dadurch gekennzeichnet, daß die Gasdiffusionsschicht und die Hilfdiffusionsschicht aus gem gleichen keramischen Material gebildet sind.

10. Sauerstoffsensorelement nach Anspruch 1 oder 5, dadurch gekennzeichnet, daß sowohl die Bezugselektrodenschicht (18) als auch die Meßelektrodenschicht (22) ein Metall aufweisen, das bezüglich Oxidationsreaktionen von Kohlenmonoxid und Kohlenwasserstoffen eine katalytische Aktivität zeigt.

11. Sauerstoffsensorelement nach Anspruch 10, dadurch gekennzeichnet, daß die Bezugs- und Meßelektrodenschicht Platin aufweisen.

12. Sauerstoffsensorelement nach Anspruch 1 oder 5, dadurch gekennzeichnet, daß die Meßelektrodenschicht eine Doppelschichtstruktur aufweist, bestehend aus einer inneren Schicht (22), die direkt auf der Oberfläche der Festelektrolytschicht (20) liegt und durch Sintern eines pulverförmigen Elektrodenmaterials gebildet ist, und einer äußeren Schicht (24), welche die Oberfläche der inneren Schicht bedeckt und durch Abscheiden eines Elektrodenmaterials durch ein physikalisches Dampfabscheidungsverfahren gebildet ist, wobei die Dicke der äußeren Schicht nicht mehr als 1 μm beträgt.

13. Sauerstoffsensorelement nach Anspruch 1 oder 5, umfassend weiterhin eine Zwischenschicht (16), die aus einem keramischen Material gebildet ist und zwischen eine Hauptfläche des Substrats (12) und der Innenfläche der Bezugselektrodenschicht (18) liegt.

14. Sauerstoffsensorelement nach Anspruch 13, dadurch gekennzeichnet, daß die Zwischenschicht mikrokopisch porös und gasdurchlässig ist.

15. Sauerstoffsensorelement nach Anspruch 1 oder 5, dadurch gekennzeichnet, daß die Porosität der Gasdiffusionsschicht im Bereich von 0,001 bis 0,2 cm³/g liegt.

16. Verwendung des Sauerstoffsensorelements (10) gemäß den Ansprüchen 1, 5 oder 6 in einer Vorrichtung zur Bestimmung einer Abweichung des Luft/Kraftstoff-Verhältnisses einer Luft/ Kraftstoff-Mischung, die in einer Verbrennungsmaschine verbrannt wird, von einem vorbestimmten Wert, indem es in einem Verbrennungsgas, das von der Verbrennungsmaschine ausgestoßen wird, angeordnet und die darin vorhandene Sauerstoffkonzentration geprüft wird.

**Revendications**

1. Elément pour sonde à oxygène ayant un substrat (12) fait en un matériau de céramique et un laminage de couches minces supporté sur le substrat, le laminage comprend une couche d'électrode de référence (18) qui est formée sur le substrat et a une structure microscopiquement poreuse et perméable au gas, une couche microscopiquement poreuse et perméable au gas (20) d'un électrolyte solide conducteur de l'ion oxygène formée sur la surface externe de la couche d'électrode de référence, une couche d'électrode de mesure (22, 24) qui est formée sur la surface externe de la couche d'électrolyte solide et a une structure microscopiquement poreuse et perméable au gas et une couche pour diffusion de gaz (26) qui est formée d'un matériau de céramique et formée sur la surface externe de la couche d'électrode de mesure et qui a une structure microscopiquement poreuse et perméable au gaz, caractérisé en ce que la porosité de la couche pour diffusion de gaz (26) en termes d'un volume total des micropores par masse unitaire ne dépasse pas 0,2 cm³/g.

2. Elément pour sonde à oxygène selon la revendication 1 où l'épaisseur de ladite couche pour diffusion de gaz (26) est comprise entre 10 et 300 μm.

3. Elément pour sonde à oxygène selon la revendication 1 où ledit matériau de céramique de ladite couche pour diffusion de gaz est du spinelle.

4. Elément pour sonde à oxygène selon la revendication 1 où ladite couche pour diffusion de gas est formée par pulvérisation au plasma.

5. Elément pour sonde à oxygène selon la revendication 1 comprenant de plus une couche pour diffusion auxiliaire 28 qui est formée d'un matériau de céramique et formée sur la surface externe de ladite couche pour diffusion de gaz (26), la couche pour diffusion auxiliaire étant poreuse et perméable au gaz mais ayant une plus forte porosité que ladite couche pour diffusion de gaz.

6. Elément pour sonde à oxygène selon la revendication 5 où ladite couche pour diffusion auxiliaire (28) n'a pas une épaisseur plus importante que 200 μm et est comprise entre 0,1 et 0,5 cm³/g en porosité en termes du volume total des micropores par masse unitaire.

7. Elément pour sonde à oxygène selon la revendication 6 où l'épaisseur de ladite couche pour diffusion de gaz (26) ne dépasse pas 250 μm.

8. Elément pour sonde à oxygène selon la revendication 7 où l'épaisseur totale de ladite couche pour diffusion de gaz et de ladite couche pour diffusion auxiliaire ne dépasse pas 300 μm.

9. Elément pour sonde à oxygène selon la revendication 7 où ladite couche pour diffusion de gaz et ladite couche pour diffusion auxiliaire sont formées de même matériau de céramique.

**0 059 933**

10. Elément pour sonde à oxygène selon la revendication 1 ou 5 où la couche d'électrode de référence (18) et la couche d'électrode de mesure (22) comprennent toutes deux un métal qui présente une activité catalytique lors de réactions d'oxydation d'oxyde de carbone et d'hydrocarbures.

11. Elément pour sonde à oxygène selon la revendication 10 où lesdites couches d'électrode de référence et de mesure comprennent du platine.

12. Elément pour sonde à oxygène selon la revendication 1 ou 5 où ladite couche d'électrode de mesure a une structure de couche double consistant en une couche interne (22) qui se trouve directement sur la surface externe de ladite couche d'électrolyte (20) et est formée par frittage d'un matériau d'électrode en poudre et une couche externe (24) qui couvre la surface externe de ladite couche interne et formée par dépôt d'un matériau d'électrode par une méthode de dépôt de vapeur physique, l'épaisseur de ladite couche externe ne dépassant pas 1 μm.

13. Elément pour sonde à oxygène selon la revendication 1 ou 5 comprenant de plus une couche intermédiaire (16) formée d'un matériau de céramique et placée entre une surface majeure dudit substrat (12) et la surface interne de ladite couche d'électrode de référence (18).

14. Elément pour sonde à oxygène selon la revendication 13 où ladite couche intermédiaire est microscopiquement poreuse et perméable au gaz.

15. Elément pour sonde à oxygène selon la revendication 1 ou 5 où la porosité de ladite couche pour diffusion de gaz est comprise entre 0,001 et 0,2 cm³/g.

16. Utilisation de l'élément pour sonde à oxygène (10) selon les revendication 1, 5 ou 6 dans un dispositif pour détecter un écart du rapport air/carburant d'un mélange air-carburant brûle dans un moyen de combustion par rapport à une valeur prédéterminée en le disposant dans un gaz de combustion évacué du moyen de combustion et en examinant la concentration d'oxygène dans ce gaz.

# FIG.1

# FIG.2

# FIG.3

# FIG.5

## FIG.4A

30
32
34
14'
11'

15
17
19
13'

## FIG.4E

30
32
34
15  18'  12'
20'
19  13'

## FIG.4B

32  15  13'
30
12'
34
19  17  14'

## FIG.4F

30
32
34
15  18'  12'
22'
19  13'  20'

## FIG.4C

32  15  16'
30
17
19
12'
34
13'

## FIG.4G

30
32
34
18  20  12
24

## FIG.4D

32  15  16'
30
17
12'
19  18'
13'  34

## FIG.4H

30
32
34
10
12
26

3

FIG.6

VOLUME OF MICROPORES ($cm^3$/g)

ABSOLUTE PRESSURE (psi)

10 (0,6895 bar)    $10^2$ (6,895 bar)    $10^3$ (68,95 bar)    $10^4$ (689,5 bar)    $10^5$ (6895 bar)

0 059 933

0 059 933

# FIG.7

ELECTROMOTIVE FORCE (V) vs AIR/FUEL RATIO

0.001 cm³/g
0.01
0.03
0.04
0.05
0.1
0.2 cm³/g

# FIG.8

ELECTROMOTIVE FORCE (V) vs AIR/FUEL RATIO

200 μm
140
100
50
10 μm

5

# FIG.9

# FIG.10

0 059 933

# FIG.11

# FIG.12

# FIG.13